# EUROPEAN PATENT APPLICATION

(11) **EP 4 819 347 A1**
(43) Date of publication of application: **07.10.2026**
(21) Application number: 25889725.5
(22) Date of filing: 17.09.2025
(51) Int. Cl.: H01M 50/383, H01M 50/367, H01M 50/317

(54) **BATTERY PACK**

(30) Priority: 06.11.2024 KR 20240156375; 12.09.2025 KR 20250131047
(71) Applicant: LG Energy Solution, Ltd., Seoul 07335 (KR)
(72) Inventor: LEE, Sang-Joon, Daejeon 34122 (KR); KANG, Jong-Mo, Daejeon 34122 (KR); KWON, Hyun-Soo, Daejeon 34122 (KR); RO, Yong-Hwan, Daejeon 34122 (KR); PARK, Shin-Young, Daejeon 34122 (KR); SEO, Sung-Won, Daejeon 34122 (KR); AHN, Moon-Youl, Daejeon 34122 (KR); HWANG, Tae-Won, Daejeon 34122 (KR)
(74) Representative: Plasseraud IP
(86) International application number: PCT/KR2025/014481
(87) International publication number: WO 2026/100976

(57) **Abstract**

A battery pack includes a base plate; an upper plate including a coupling portion coupled to an upper surface of the base plate, a protruding portion extending rearward from the coupling portion and providing an internal space, and a buffering portion extending forward from the coupling portion and providing an internal space; and a battery module including a venting portion facing the buffering portion and being in contact with the protruding portion.

## Description

### TECHNICAL FIELD

The present disclosure relates to a battery pack.

This application is based on and claims priority from Korean Patent Application No. 10-2024-0156375 filed on November 6, 2024, with the Korean Intellectual Property Office, and Korean Patent Application No. 10-2025-0131047 filed on September 12, 2025, with the Korean Intellectual Property Office, the disclosures of which are incorporated herein in their entirety by reference.

### BACKGROUND ART

As the demand for portable electronic devices such as smartphones, tablet PCs, and smartwatches has significantly increased, and electric vehicles are gradually becoming more widespread, research into batteries mounted in such devices, for example, secondary batteries capable of repeated charging and discharging, has been actively conducted.

Currently, commercialized batteries include, for example, nickel-cadmium batteries, nickel-hydrogen batteries, nickel-zinc batteries, and lithium batteries. Of these batteries, lithium batteries are gaining considerable attention due to their advantages including a substantially low memory effect to allow a high degree of freedom in charging and discharging, a very low self-discharging rate, and high energy density, as compared to nickel-based batteries.

Such lithium secondary batteries typically use lithium-based oxides and carbon materials as positive and negative electrode active materials, respectively. A lithium secondary battery includes an electrode assembly in which a positive electrode plate and a negative electrode plate, each coated with their respective active materials, are arranged with a separator interposed therebetween, and a battery case that serves as an exterior housing to hermetically seal and contain the electrode assembly along with an electrolyte.

In general, lithium secondary batteries may be classified according to the shape of the exterior housing into cylindrical secondary batteries, in which the electrode assembly is housed in a metal can, and pouch-type secondary batteries, in which the electrode assembly is housed in a pouch made of an aluminum laminate sheet.

Recently, secondary batteries have been widely used not only in small devices such as portable electronic devices, but also in medium and large devices such as electric vehicles and energy storage systems (ESS), for driving or energy storage purposes. These secondary batteries may be housed together inside a module case in an electrically connected state to form a single battery module. In this case, each secondary battery included in the battery module may be referred to as a battery cell. A plurality of such battery modules may be connected together to form a battery pack.

Meanwhile, as secondary batteries are used in the form of packs for medium and large devices such as electric vehicles and energy storage systems, research into the safety of secondary batteries, including events such as thermal runaway, has been actively conducted.

However, when a battery pack includes a plurality of battery modules, and each battery module includes a plurality of battery cells, the system may be vulnerable to thermal chain reactions between battery modules or between battery cells. For example, when an event such as thermal runaway occurs within one of the battery modules, it is necessary to suppress the propagation of the thermal runaway to other battery modules or battery cells. When the propagation of thermal runaway between battery modules or battery cells is not properly suppressed, an event occurring in a specific battery module or battery cell may trigger a chain thermal reaction in other modules or cells, potentially leading to an explosion, fire, or a significant increase in the severity of such incidents.

In particular, when an event such as thermal runaway occurs in one of the battery modules, gas or flames may be randomly discharged to the outside. When the discharge of gas or flames is not properly controlled, the gas or flames may be released toward other battery modules, which may potentially trigger a thermal chain reaction in those modules. Especially at the front side of a battery module, module terminals may be present for electrical connection with other battery modules or the battery pack, such as through a module busbar or similar structure. Therefore, when flames are discharged toward the front side of such a battery module, the discharged flames may damage the module terminals within the battery pack and cause an electrical short. Furthermore, since another battery module may be located in front of the battery module, flames discharged in that direction are likely to reach the adjacent battery module, making fire propagation between modules more likely.

When thermal propagation between battery modules or battery cells is not properly controlled, a rapid voltage drop may occur in the battery module or battery pack. Then, the device in which the battery module or battery pack is installed may be caused to shut down unexpectedly, potentially leading to unforeseen damage. For example, when a sudden voltage drop occurs in a battery pack while an electric vehicle is in operation, there may not be sufficient time to move the vehicle to a safe location.

In addition, when thermal propagation between battery modules or battery cells is not properly controlled and a fire or explosion occurs suddenly, there is a high possibility of causing injury to the user. For example, in the event of thermal runaway in an electric vehicle, when sufficient time is not secured before the situation develops into a full-scale fire, the occupants may not be able to evacuate safely.

### DISCLOSURE

### Technical Problem

The present disclosure provides a battery pack with an improved structure capable of appropriately controlling the discharge of flames generated inside the battery pack, and a vehicle including the same.

The present disclosure provides a structure that enables smooth discharge of venting gas generated inside the battery pack.

The present disclosure also provides a structure capable of minimizing damage to the battery pack in the generation of thermal events.

However, the technical problems to be solved by the present disclosure are not limited to those described above, and other problems not mentioned will be clearly understood by those skilled in the art from the following description of the disclosure.

### Technical Solution

According to an embodiment of the present disclosure, a battery pack may include: a base plate; an upper plate including a coupling portion coupled to an upper surface of the base plate, a protruding portion extending rearward from the coupling portion and providing an internal space, and a buffering portion extending forward from the coupling portion and providing an internal space; and a battery module including a venting portion facing the buffering portion and being in contact with the protruding portion.

The buffering portion may be spaced apart from the base plate.

The buffering portion may be spaced apart from the venting portion.

The buffering portion may extend toward the venting portion.

A height of the buffer portion may be configured to be lower than a height of the protruding portion.

The protruding portion may include a support portion that is in contact with the battery module; and an inclined portion that connects the support portion to the coupling portion and has an inlet hole.

The inclined portion may include a convex portion protruding outward.

The inclined portion may include a concave part protruding inward.

The inclined portion may include a venting guide that covers a part of the inlet hole.

The venting guide may include a first venting guide extending outward from the inclined portion.

The venting guide may include a second venting guide extending inward from the inclined portion.

The battery pack may further include a venting device located inside the upper plate and installed on the base plate.

In another aspect to achieve the same objective, a vehicle according to the present disclosure may include the battery pack described above.

According to another embodiment of the present disclosure, a battery pack case may include: a base assembly; a side wall installed at an upper surface edge of the base assembly; and a pack cover installed on the side wall. The base assembly includes: a base plate; and an upper plate including a coupling portion coupled to an upper surface of the base plate, a protruding portion extending rearward from the coupling portion and providing an internal space, and a buffering portion extending forward from the coupling portion and providing an internal space. The protruding portion is configured to be contacted by a battery module from above, and the buffering portion is configured to face a venting portion of the battery module mounted from above.

The protruding portion may include a support portion spaced apart from the base plate, and the battery module may be configured to be fastened to the support portion from above.

The protruding portion may include an inclined portion that connects the support portion and the coupling portion, and the inclined portion may be formed with a plurality of inlet holes.

A height of the buffer portion may be configured to be lower than a height of the protruding portion.

The upper plate may be integrally formed.

### Advantageous Effects

According to at least one embodiment of the present disclosure, a venting gas generated inside the battery pack may be easily discharged.

According to at least one embodiment of the present disclosure, external damage to the battery pack may be suppressed or prevented even when a thermal event occurs.

According to at least one embodiment of the present disclosure, the electrical safety of the battery pack may be improved.

According to at least one embodiment of the present disclosure, thermal propagation may be suppressed.

### DESCRIPTION OF DRAWINGS

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a view illustrating a battery pack according to an embodiment of the present disclosure.
FIG. 2 is a view illustrating a separated configuration of a portion of the battery pack of FIG. 1.
FIG. 3 is a view illustrating the battery module of FIG. 2.
FIG. 4 is a view illustrating the battery module of FIG. 3 from a different direction.
FIG. 5 is a view illustrating a separated configuration of a portion of the battery module of FIG. 3.
FIG. 6 is a view illustrating a separated stacked body of FIG. 5.
FIG. 7 is a view illustrating changes in FIG. 4 when a thermal event occurs.
FIG. 8 is a view illustrating the base assembly of FIG. 2.
FIG. 9 is a view illustrating a separated configuration of the base assembly of FIG. 8.
FIG. 10 is a sectional view taken along line B-B' of FIG. 8.
FIG. 11 is a sectional view taken along line C-C' of FIG. 8.
FIG. 12 is a sectional view taken along line A-A' of FIG. 1.
FIG. 13 is a view illustrating changes in FIG. 12 when a thermal event occurs.
FIG. 14 is a view illustrating a modified embodiment of FIG. 12.
FIG. 15 is a view illustrating another modified embodiment of FIG. 12.
FIG. 16 is a view illustrating still another modified embodiment of FIG. 12.
FIG. 17 is a view illustrating a vehicle according to an aspect of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### BEST MODE

Hereinafter, embodiments of the present disclosure are described in detail with reference to the accompanying drawings. Words and terms used in the detailed description and the claims herein should not be interpreted to be limited to their usual or dictionary meanings, but should be interpreted to have meanings and concepts that correspond to the technical idea of the present disclosure in compliance with the principle that inventors may appropriately define terms and concepts for the purpose of best describing the present disclosure.

Accordingly, it can be appreciated that the embodiments described herein and the configurations illustrated in the drawings are merely examples of the present disclosure, which do not exhaustively represent the technical idea of the present disclosure, and various equivalents and modifications may be made to substitute the present disclosure at the time of filing the present disclosure.

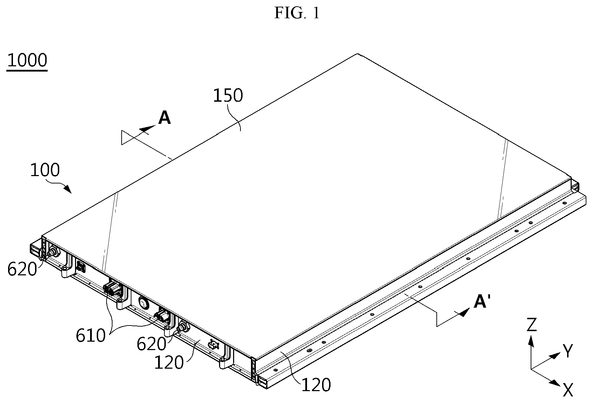

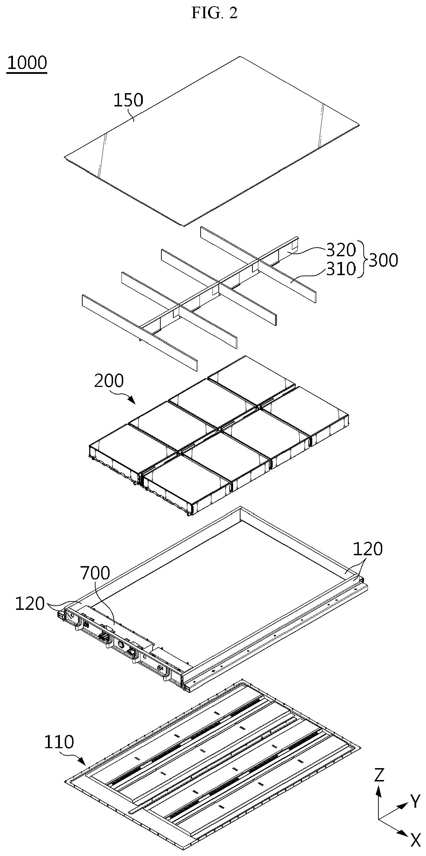

FIG. 1 is a view illustrating a battery pack 100 according to an embodiment of the present disclosure. FIG. 2 is a view illustrating a separated configuration of a portion of the battery pack 100 of FIG. 1.

Referring to FIGS. 1 and 2, a battery pack 1000 according to an embodiment of the present disclosure may include a case 100. The case 100 may form an outer appearance of the battery pack 1000. The case 100 may have a rectangular parallelepiped shape. The case 100 may provide an internal space. The case 100 may include a pack cover 150. The pack cover 150 may have a rectangular plate shape. A battery module 200 may be located inside the case 100. A plurality of battery modules 200 may be provided.

The case 100 may include a base assembly 110. The base assembly 110 may have a rectangular shape. The base assembly 110 may form an outer appearance of the battery pack 1000. The base assembly 110 may provide an internal space of the battery pack 1000.

The case 100 may include a side wall 120. The side wall 120 may be installed, fastened, coupled, fixed, or attached to an upper surface of the base assembly 110. The side wall 120 may be made up of four parts. The side wall 120 may be disposed along a periphery of the base assembly 110. The side wall 120 may form an outer appearance of the battery pack 1000. The side wall 120 may provide an internal space.

The side wall 120 may include a connector 610. The connector 610 may output power of the battery pack 1000. In addition, the connector 610 may charge the battery pack 1000 with power. A plurality of connectors 610 may be provided.

The side wall 120 may include a port 620. The port 620 may function as a passage through which a cooling medium CM is introduced or discharged. A plurality of ports 620 may be provided.

A battery management system (BMS) 700 may be located inside the case. The BMS 700 may control charging and discharging of the battery module. The BMS 700 may acquire state information of the battery module. In another embodiment, the BMS 700 may be installed outside the case. For example, the BMS 700 installed outside the case may be configured to control a plurality of battery packs 1000.

The pack cover 150 may be installed, fastened, coupled, fixed, or attached to the side wall 120. The pack cover 150 may cover an internal space of the battery pack 1000.

The battery pack 1000 may include a venting device 500. The venting device 500 may be installed on the base assembly 110. For example, the venting device 500 may be a gas valve. The venting device 500 may be opened to discharge gas when pressure inside the case 100 increases. In addition, the venting device 500 may block external air from flowing into the case 100. A plurality of venting devices 500 may be provided.

The battery pack 1000 may include a partition wall 300. The partition wall 300 may include a first partition wall 310 and a second partition wall 320. A plurality of partition walls 300 may be provided. The partition wall 300 may be installed, fastened, fixed, coupled, or attached to an upper surface of the base assembly 110. The partition wall 300 may partition an internal space of the battery pack 1000. The battery module 200 may be located in a space partitioned by the partition wall 300.

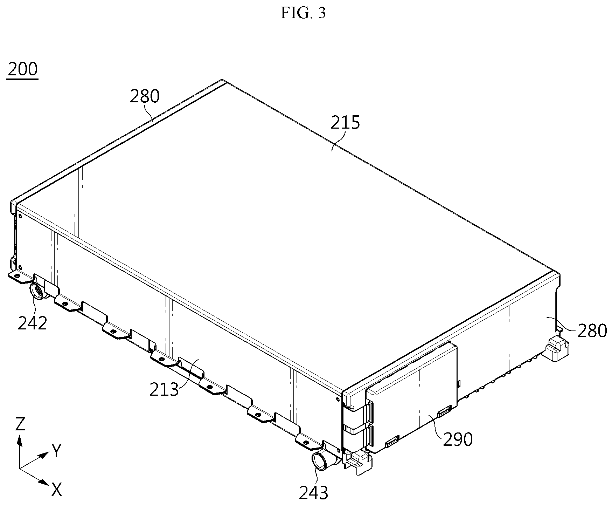

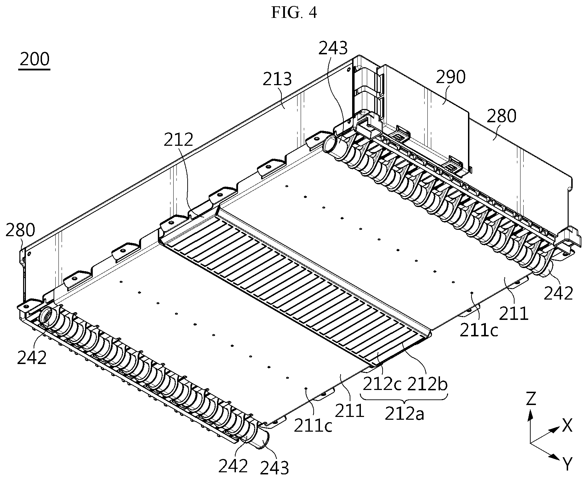

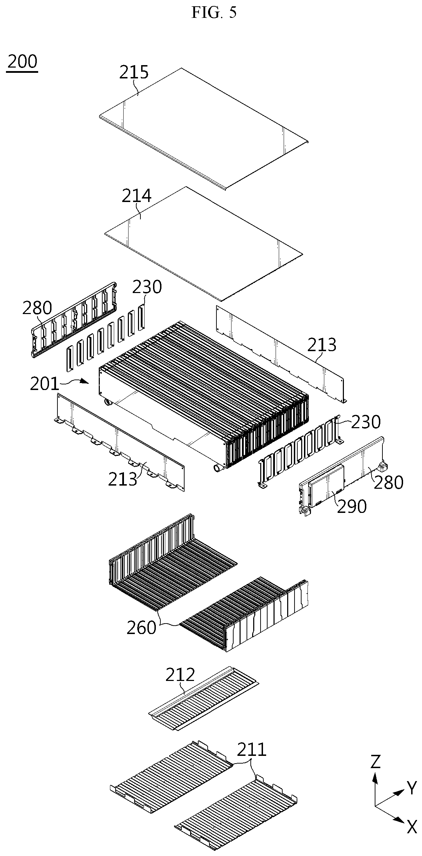

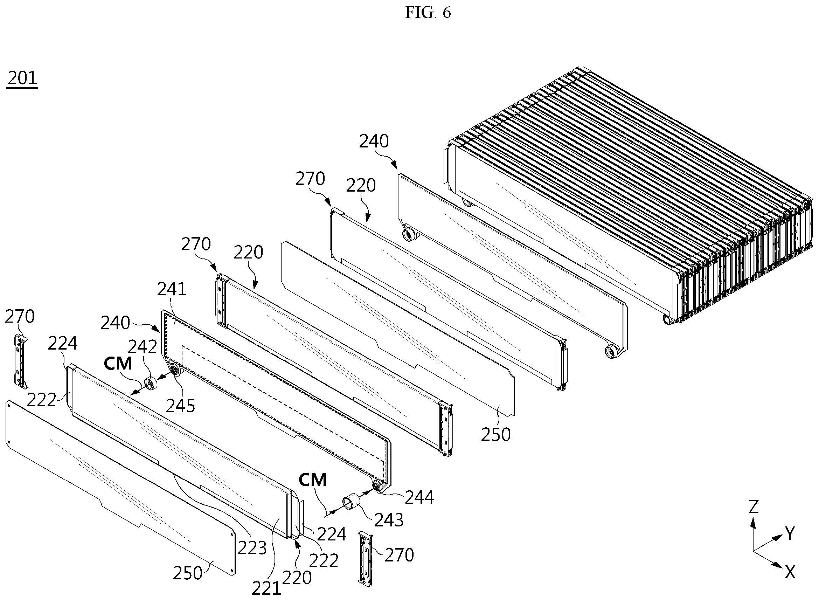

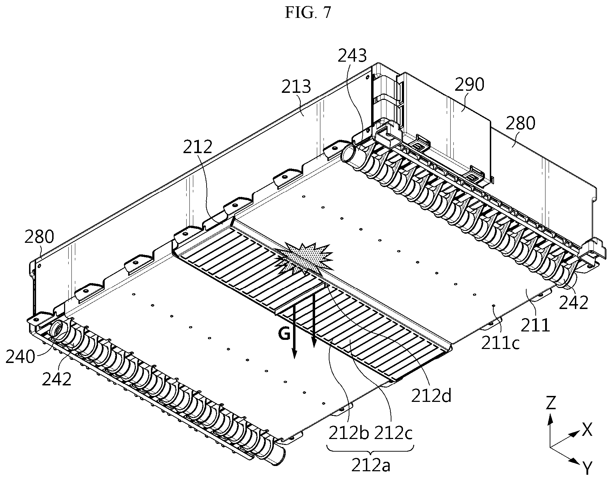

FIG. 3 is a view illustrating the battery module 200 of FIG. 2. FIG. 4 is a view illustrating the battery module 200 of FIG. 3 from a different direction. FIG. 5 is a view illustrating a separated configuration of a portion of the battery module 200 of FIG. 3. FIG. 6 is a view illustrating a separated stacked body 201 of FIG. 5. FIG. 7 is a view illustrating changes in FIG. 4 when a thermal event occurs.

Referring to FIGS. 3 to 7, the battery module 200 may include a bottom cover 211. A pair of bottom covers 211 may be provided. The pair of bottom covers 211 may be arranged along a front-rear direction or X-axis direction. The bottom cover 211 may form an outer appearance of the battery module 200. The bottom cover 211 may have a flat plate shape.

The venting cover 212 may be located between the pair of bottom covers 211. The venting cover 212 may be installed, fastened, coupled, fixed, or attached to the pair of bottom covers 211. The venting cover 212 may cover the space between the pair of bottom covers 211. The venting cover 212 may form an outer appearance of the battery module 200. The venting cover 212 may include a material having high heat resistance. The venting cover 212 may include a material having high flame resistance. The venting cover 212 may include a material having high thermal insulation. For example, the venting cover 212 may include mica material.

The battery module 200 may include a battery cell 220. The battery cell 220 may refer to a secondary battery. For example, the battery cell 220 may be a pouch-type secondary battery. However, the shape of the battery cell 220 is not limited to a pouch shape and may have various shapes such as a cylindrical or prismatic shape.

The battery cell 220 may extend along a front-rear direction or X-axis direction. The battery cell 220 may include an accommodation portion 221 having an electrode assembly, first sealing portions 222 protruding from the front side and rear side of the accommodation portion 221, respectively, and a second sealing portion 223 protruding downward from the accommodation portion 221. In addition, the battery cell 220 may include electrode leads 224 protruding from first sealing portions 222 on the front and rear sides of the accommodation portion 221, respectively. The electrode leads 224 may protrude from the front side and rear side of the accommodation portion 221.

A plurality of battery cells 220 may be provided. The plurality of battery cells 220 may be located on the bottom cover 211. The plurality of battery cells 220 may be located on the venting cover 212. The plurality of battery cells 220 may form a stacked body 201.

The plurality of battery cells 220 may be stacked in one direction. For example, the plurality of battery cells 220 may be stacked along a left-right direction or a Y-axis direction.

When a thermal event occurs, a venting gas G may be discharged from the battery cell 220. The venting gas G may be discharged through the second sealing portion 223.

The battery module 200 may include a cartridge 270. The cartridge 270 may be mounted, coupled, fastened, fixed, or accommodated to the first sealing portion 222 of the battery cell 220. A pair of cartridges 270 may be respectively mounted, coupled, fastened, fixed, or accommodated to the front first-sided sealing portion 222 and the rear-sided first sealing portion 222. A plurality of cartridges 270 may be provided. The pair of cartridges 270 may correspond one-to-one with a single battery cell 220. The plurality of cartridges 270 may form the stacked body 201.

The battery module 200 may include a cooling plate 240. The cooling plate 240 may include a flow path 241 therein. A cooling medium CM may flow along the flow path 241. The cooling plate 240 may be in contact with, coupled to, fastened to, or fixed to the battery cell 220. A plurality of cooling plates 240 may be provided. The plurality of cooling plates 240 may be stacked in one direction. For example, the plurality of cooling plates 240 may be stacked along a left-right direction or a Y-axis direction. The plurality of cooling plates 240 may be disposed between the plurality of battery cells 220. For example, the cooling plate 240 may be disposed for every two battery cells 220. The plurality of cooling plates 240 may form the stacked body 201.

The cooling plate 240 may have a flat plate shape. The cooling plate 240 may include an inlet 244 and an outlet 245. The flow path 241 may fluidly connect the inlet 244 and the outlet 245. The cooling medium CM may be introduced through the inlet 244 and discharged through the outlet 245.

A first tube 242 and a second tube 243 may be in fluid communication. A plurality of first tubes 242 may be provided. A plurality of second tubes 243 may be provided. The first tubes 242 and the second tubes 243 may be alternately arranged. The first tube 242 or the second tube 243 may be in communication with the inlet 244 of the cooling plate 240. The first tube 242 or the second tube 243 may be in communication with the outlet 245 of the cooling plate 240. The first tubes 242 and the second tubes 243 may fluidly connect a plurality of cooling plates 240.

A pad 250 may be disposed between a plurality of battery cells 220. A plurality of pads 250 may be provided. The pad 250 may be disposed between at least some of the battery cells 220 and/or on the outer periphery of the stacked body 201. For example, the pad 250 may be configured to be disposed between every two battery cells 220 stacked in the left and right direction. A plurality of pads 250 may form the stacked body 201.

The pad 250 may be made of an elastic material to absorb swelling of the battery cell 220. For example, the pad 250 may be made of a foam material such as polyurethane. Alternatively, the pad 250 may be made of a material capable of blocking heat or flame. For example, the pad 250 may be made of an insulating or fire-resistant material such as silicone or mica.

The busbar frame assembly 230 may be respectively provided on the front and rear sides of the plurality of battery cells 220. The busbar frame assembly 230 may be electrically connected to the electrode leads 224 of the plurality of battery cells 220.

The front busbar frame assembly 230 may be electrically connected to the front electrode leads 224 of the plurality of battery cells 220. The front busbar frame assembly 230 may cover the front of the cooling plate 240. The front busbar frame assembly 230 may cover the front of the pad 250. The front busbar frame assembly 230 may cover the front of the cartridge 270.

The rear busbar frame assembly 230 may be electrically connected to the rear electrode leads 224 of the plurality of battery cells 220. The rear busbar frame assembly 230 may cover the rear of the cooling plate 240. The rear busbar frame assembly 230 may cover the rear of the pad 250. The rear busbar frame assembly 230 may cover the rear of the cartridge 270.

A pair of end covers 280 may cover the front and rear sides of the busbar frame assembly 230, respectively. The end cover 280 may have a rectangular shape. The pair of end covers 280 may form the outer appearance of the battery module 200.

The front end cover 280 may be fastened, coupled, assembled, or fixed to the front bottom cover 211. The rear end cover 280 may be fastened, coupled, assembled, or fixed to the rear bottom cover 211.

A control unit 290 may be fastened, coupled, assembled, or fixed to the front end cover 280. The control unit 290 may be provided on an outer surface or a front surface of the front end cover 280. The control unit 290 may be electrically connected to the plurality of battery cells 220. The control unit 290 may control charging and discharging of the plurality of battery cells 220. The control unit 290 may acquire state information of the plurality of battery cells 220.

A pair of side covers 213 may be provided. The side cover 213 may have a flat plate shape. The side cover 213 may have a rectangular shape. The pair of side covers 213 may respectively cover both sides of the stacked body 201. The side cover 213 may be fastened, coupled, assembled, or fixed to the end cover 280. The side cover 213 may be fastened, coupled, assembled, or fixed to the bottom cover 211. The side cover 213 may be fastened, coupled, assembled, or fixed to the venting cover 212. The pair of side covers 213 may form an outer appearance of the battery module 200.

The top cover 215 may be located on top of the stacked body 201. The top cover 215 may cover an upper surface of the stacked body 201. The top cover 215 may have a flat plate shape. The top cover 215 may have a rectangular shape. The top cover 215 may form an outer appearance of the battery module 200. The top cover 215 may be fastened, coupled, assembled, or fixed to the side cover 213. The top cover 215 may be fastened, coupled, assembled, or fixed to the end cover 280.

The top pad 214 may be located between the top cover 215 and the stacked body 201. The top cover 215 may have a rectangular shape. The top pad 214 may have a flat plate shape. The top pad 214 may be made of an elastic material to absorb swelling of the battery cell 220. For example, the top pad 214 may be made of a foam material such as polyurethane. Alternatively, the top pad 214 may be made of a material capable of blocking heat or flame. For example, the top pad 214 may be made of an insulating material or fire-resistant material such as silicone or mica. The top pad 214 may be compressed between the top cover 215 and the stacked body 201.

The battery module 200 may include a heat transfer member 260. The heat transfer member 260 may include a material having high thermal conductivity. For example, the heat transfer member 260 may be a resin.

The bottom cover 211 may include a plurality of injection holes 211c. The heat transfer member 260 may be introduced into the interior of the battery module 200 through the injection holes 211c. In this case, the heat transfer member 260 may be in a liquid state. The heat transfer member 260 may remain in a liquid state at high temperatures. The injected heat transfer member 260 may transition to a solid state as the temperature decreases.

The heat transfer member 260 may be disposed between the bottom cover 211 and the stacked body 201. The heat transfer member 260 may bond the bottom cover 211 to the stacked body 201. The heat transfer member 260 may be disposed between the bottom cover 211 and the plurality of battery cells 220. The heat transfer member 260 may bond the plurality of battery cells 220 to the bottom cover 211.

The heat transfer member 260 may not be disposed between the venting cover 212 and the stacked body 201.

The heat transfer member 260 may be disposed between the front busbar frame assembly 230 and the front end cover 280. The heat transfer member 260 may bond the front busbar frame assembly 230 to the front end cover 280. The heat transfer member 260 may be disposed between the rear busbar frame assembly 230 and the rear end cover 280. The heat transfer member 260 may bond the rear busbar frame assembly 230 to the rear end cover 280.

The venting cover 212 may include a separation line 212b. The separation line 212b (score line) may be used as a general term encompassing a perforated line, notching line, cutting line, shredding line, tear line, or separation line. The separation line 212b may be configured to easily separate under pressure applied to the venting cover 212.

The separation line 212b may have a rectangular trajectory. A portion of the venting cover 212 surrounded by the separation line 212b may be referred to as a separation part 212c. A venting portion 212a may include the separation line 212b and the separation part 212c. A plurality of separation lines 212b may be provided. The plurality of separation lines 212b may be arranged in a left-right direction or along a Y-axis direction. A plurality of separation parts 212c may be provided. The plurality of separation parts 212c may be arranged in the left-right direction or along the Y-axis direction.

The separation part 212c may be separated from the venting cover 212 by pressure applied to the venting cover 212. As a result, a venting hole 212d may be formed in the venting cover 212.

The venting portion 212a may face the second sealing portion 223 of the stacked body 201. When a thermal event occurs, a venting gas G may be discharged through the second sealing portion 223. The venting gas G may be discharged downward or in the -Z-axis direction. The venting gas G may apply pressure to the separation part 212c. The separation part 212c may be detached by the venting gas G, and the venting hole 212d may be formed. The venting gas G may be discharged to the outside of the battery module 200 through the venting hole 212d.

At this time, the venting hole 212d may be formed only at the separation part 212c facing the battery cell 220 where the thermal event has occurred. Other separation parts 212c may not be separated. The separation parts 212c that are not separated may block the venting gas G from flowing into the interior of the battery module 200.

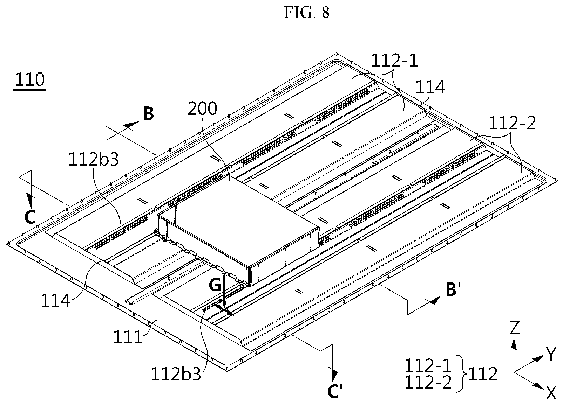

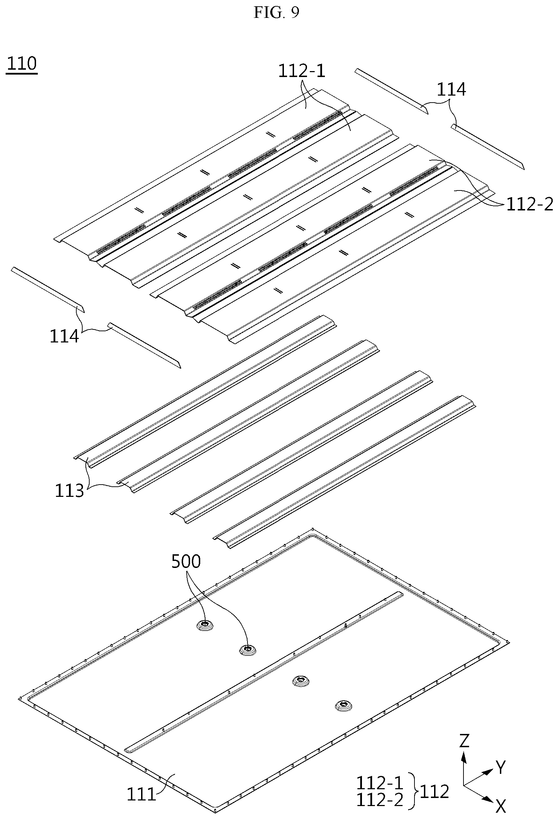

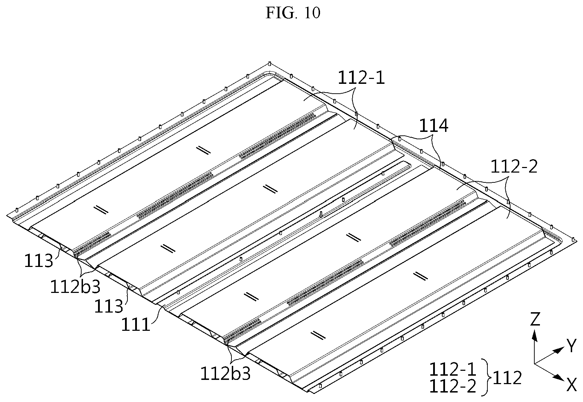

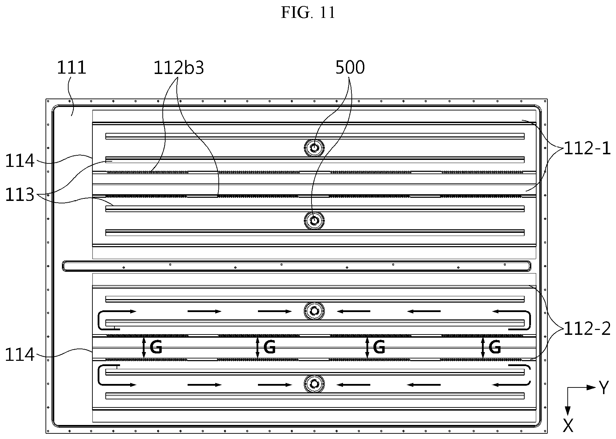

FIG. 8 illustrates the base assembly 110 of FIG. 2 in greater detail. FIG. 9 is an exploded view of the base assembly 110 illustrated in FIG. 8. FIG. 10 is a sectional view taken along line B-B' of FIG. 8. FIG. 11 is a sectional view taken along line C-C' of FIG. 8.

Referring to FIGS. 8 to 11, the base assembly 110 may include a base plate 111. The base plate 111 may have a flat shape. The base plate 111 may have a rectangular shape. The base plate 111 may form an outer appearance of the battery pack 1000.

A venting device 500 may be provided on the base plate 111. A plurality of venting devices 500 may be arranged along a front-rear direction or X-axis direction. The venting device 500 may discharge the venting gas G in a downward direction or -Z-axis direction.

An upper plate 112 may be fastened, coupled, assembled, fixed, or attached to an upper surface of the base plate 111. The upper plate 112 may provide an internal space. This space provided by the upper plate 112 may be referred to as a venting space VS. The upper plate 112 may be elongated in a left-right direction or Y-axis direction. A plurality of upper plates 112 may be provided. The plurality of upper plates 112 may be arranged in a front-rear direction or X-axis direction. The upper plate 112 may have an open-ended structure on both sides. The upper plate 112 may include a plurality of inlet holes 112b3. The venting gas G discharged from the battery module 200 may flow into the interior of the upper plate 112 through the inlet holes 112b3. The venting device 500 may be disposed within the upper plate 112 on the base plate 111. According to one embodiment, the plurality of venting devices 500 may be provided to correspond one-to-one with the upper plates 112. A pair of adjacent upper plates 112-1 and 112-2 may have a symmetrical structure.

A side plate 114 may cover both sides of the upper plate 112. A plurality of side plates 114 may be provided. Each side plate 114 may be fastened, coupled, assembled, fixed, or attached to each of the both sides of the upper plate 112.

An inner plate 113 may be disposed inside the upper plate 112. A plurality of inner plates 113 may be provided. The plurality of inner plates 113 may be provided to correspond one-to-one with the upper plate 112. The inner plate 113 may be fastened, coupled, assembled, fixed, or attached to an upper surface of the base plate 111. The inner plate 113 may provide an internal space. The inner plate 113 may be elongated in a left-right direction or Y-axis direction. A length of the inner plate 113 in the left-right direction may be shorter than a length of the upper plate 112 in the left-right direction. A plurality of inner plates 113 may be provided. The plurality of inner plates 113 may be arranged in a front-rear direction or X-axis direction. The inner plate 113 may have an open-ended structure on both sides. A venting device 500 may be disposed inside the inner plate 113. The plurality of venting devices 500 may be provided to correspond one-to-one with the inner plate 113. The venting gas G discharged from the battery module 200 may flow into the interior of the upper plate 112 through the inlet holes 112b3. The venting gas G introduced into the upper plate 112 may flow into the interior of the inner plate 113 through both sides of the inner plate 113. The venting gas G introduced into the interior of the inner plate 113 may be discharged to the outside of the battery pack 1000 through the venting device 500. The inner plate 113 may extend a flow path of the venting gas G. Accordingly, the venting gas G may be discharged in a cooled state. Additionally, the extension of the flow path may suppress the discharge of particles such as flammable debris.

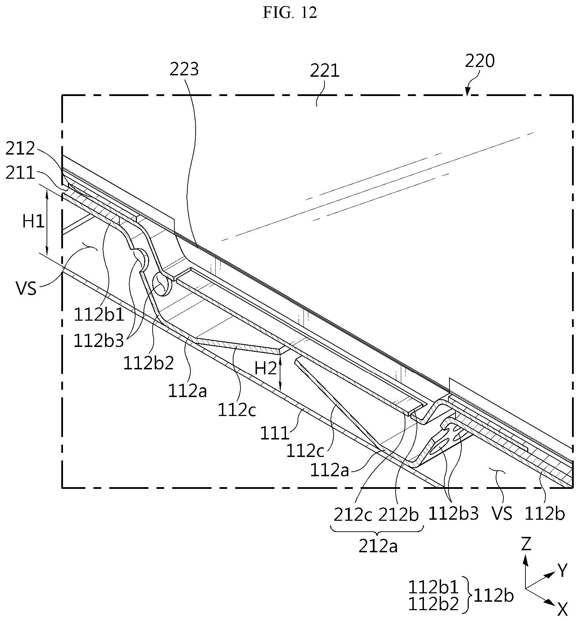

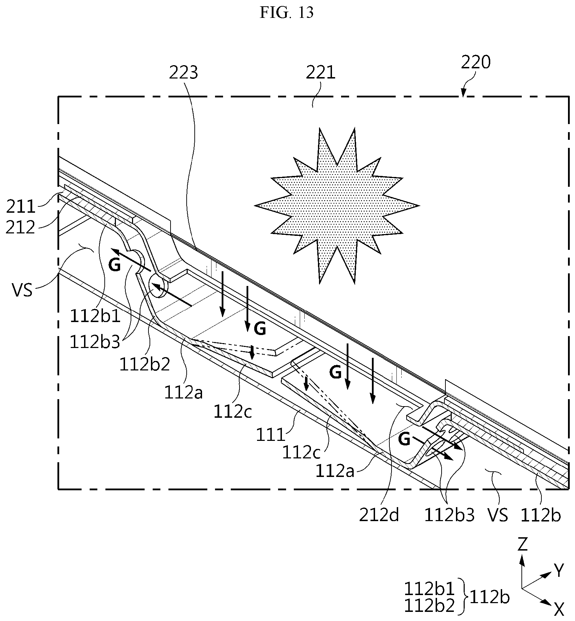

FIG. 12 is a sectional view taken along line A-A' of FIG. 1. FIG. 13 is a view illustrating changes in FIG. 12 when a thermal event occurs.

Referring to FIGS. 12 and 13, the upper plate 112 may include a coupling portion 112a. The coupling portion 112a may be fastened, coupled, assembled, fixed, or attached to an upper surface of the base plate 111. The coupling portion 112a may be respectively provided at a front side and a rear side of the upper plate 112.

The upper plate 112 may include a protruding portion 112b. The protruding portion 112b may connect a pair of coupling portions 112a. The protruding portion 112b may extend rearward from the front-side coupling portion 112a. The protruding portion 112b may extend forward from the rear-side coupling portion 112a. The protruding portion 112b may provide an internal space. The protruding portion 112b may accommodate an inner plate 113. The battery module 200 may be fastened, joined, assembled, fixed, or attached to the protruding portion 112b from above.

The protruding portion 112b may include a support portion 112b1. The support portion 112b1 may be spaced apart from the base plate 111. The battery module 200 may be fastened, joined, assembled, fixed, or attached to the support portion 112b1 from above. The protruding portion 112b may include an inclined portion 112b2. The inclined portion 112b2 may connect the support portion 112b1 and the coupling portion 112a. The inclined portion 112b2 may include a plurality of inlet holes 112b3.

The upper plate 112 may include a buffering portion 112c. The buffering portion 112c may extend from the coupling portion 112a. The buffering portion 112c may extend in a left-right direction or a Y-axis direction. The buffering portion 112c may provide an internal space. The buffering portion 112c may be spaced apart from the base plate 111. The buffering portion 112c may extend forward of the coupling portion 112a. The buffering portion 112c may extend rearward of the coupling portion 112a. The buffering portions 112c of adjacent upper plates 112 may be arranged side by side. The buffering portion 112c may be spaced apart from the base plate 111 in an inclined manner. The buffering portion 112c may extend toward the venting portion 212a. The buffering portion 112c may face the venting portion 212a of the battery module 200. A pair of buffering portions 112c may face the venting portion 212a of the battery module 200.

In one embodiment, the upper plate 112 may be integrally formed. For example, the coupling portion 112a, the support portion 112b1, the inclined portion 112b2, and the buffering portion 112c may be integrally formed.

When a thermal event occurs, the battery module 200 may discharge the venting gas G through the venting portion 212a. The venting gas G may collide with the buffering portion 112c. The buffering portion 112c may bend or deform downward or in a -Z-axis direction due to the collision with the venting gas G. The buffering portion 112c may absorb energy of the venting gas G. The energy of the venting gas G may be reduced by the buffering portion 112c. The venting gas G with reduced energy may flow into the interior of the upper plate 112 through the inlet holes 112b3. Damage to the battery pack 1000 caused by the venting gas G may be suppressed or prevented by the reduction of energy of the venting gas G.

The buffering portion 112c may be located between the venting portion 212a and the base plate 111. The buffering portion 112c may be spaced apart from the venting portion 212a. When a thermal event occurs, the separation part 212c may fall downward or be bent. By being spaced apart from the venting portion 212a, the buffering portion 112c may facilitate the opening of the venting portion 212a.

The height H2 of the buffering portion 112c may be configured to be lower than a height H1 of the protrusion 112b. By configuring the height H2 of the buffering portion 112c to be lower than the height H1 of the protrusion 112b, the buffering portion 112c may facilitate the opening of the venting portion 212a.

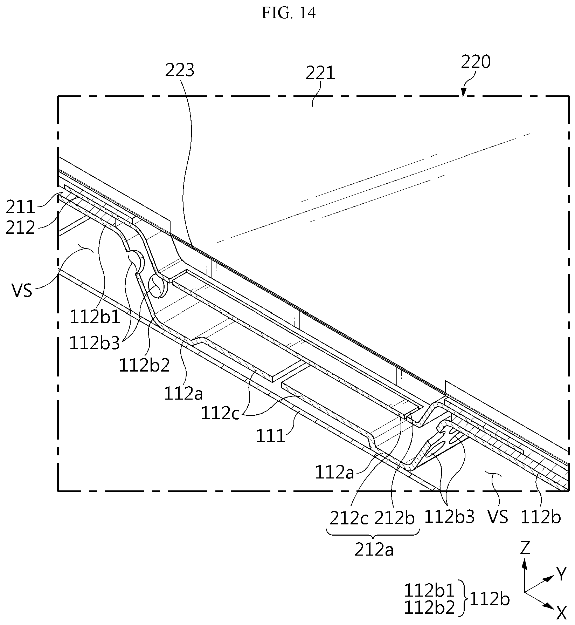

FIG. 14 is a view illustrating a modified embodiment of FIG. 12. Referring to FIG. 14, the buffering portion 112c may be spaced apart from the base plate 111 with a step difference. The buffering portion 112c may be arranged to be parallel to the base plate 111. A constant gap may be formed between the buffering portion 112c and the base plate 111. By forming the height of the buffering portion 112c to be constant, the opening of the venting portion 212a may become easier.

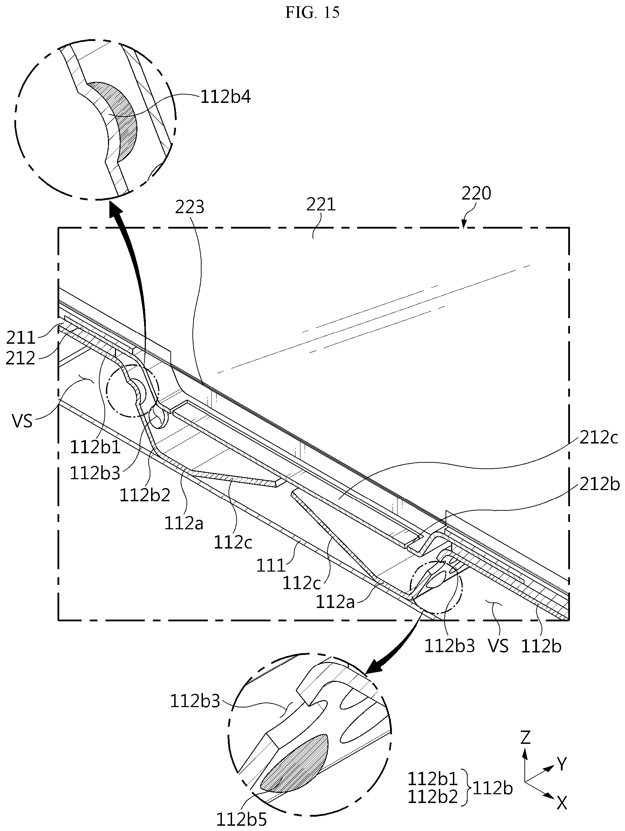

FIG. 15 is a view illustrating another modified embodiment of FIG. 12. Referring to FIG. 15, the inclined portion 112b2 may include a convex portion 112b4. The convex portion 112b4 may protrude outward from the inclined portion 112b2. The convex portion 112b4 may be integrally formed with the inclined portion 112b2. The convex portion 112b4 may be formed by bending a portion of the inclined portion 112b2. When a thermal event occurs, the convex portion 112b4 may reduce the energy of the venting gas G by colliding with the venting gas G.

The inclined portion 112b2 may include a concave portion 112b5. The concave portion 112b5 may protrude inward from the inclined portion 112b2. The concave portion 112b5 may be integrally formed with the inclined portion 112b2. The concave portion 112b5 may be formed by bending a portion of the inclined portion 112b2. When a thermal event occurs, the concave portion 112b5 may reduce the energy of the venting gas G by colliding with the venting gas G.

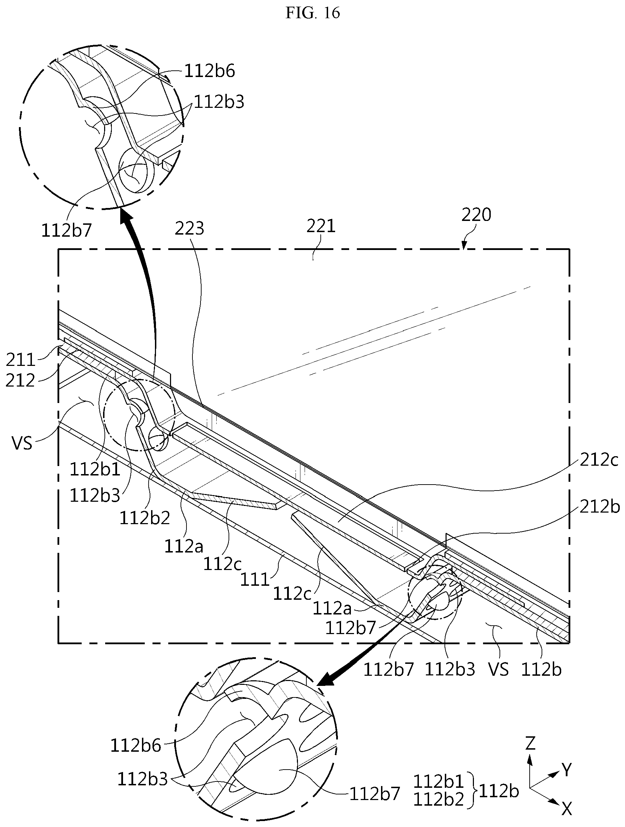

FIG. 16 is a view illustrating still another modified embodiment of FIG. 12. Referring to FIG. 16, the inclined portion 112b2 may include venting guides 112b6 and 112b7. The venting guides 112b6 and 112b7 may cover a portion of the inlet hole 112b3. The venting guides 112b6 and 112b7 may be integrally formed with the inclined portion 112b2. The venting guides 112b6 and 112b7 may be formed by bending a portion of the inclined portion 112b2. When a thermal event occurs, the venting guides 112b6 and 112b7 may reduce the energy of the venting gas G by colliding with the venting gas G.

The venting guides 112b6 and 112b7 may include a first venting guide 112b6. The first venting guide 112b6 may protrude outward from the inclined portion 112b2. The venting guides 112b6 and 112b7 may include a second venting guide 112b7. The second venting guide 112b7 may protrude inward from the inclined portion 112b2.

The venting guides 112b6 and 112b7 may disperse the flow direction of the venting gas G. The venting guides 112b6 and 112b7 may diffuse the venting gas G. As the venting gas G is dispersed or diffused, the energy density per unit volume may be reduced. Thus, the battery pack 1000 may be suppressed or prevented from being damaged.

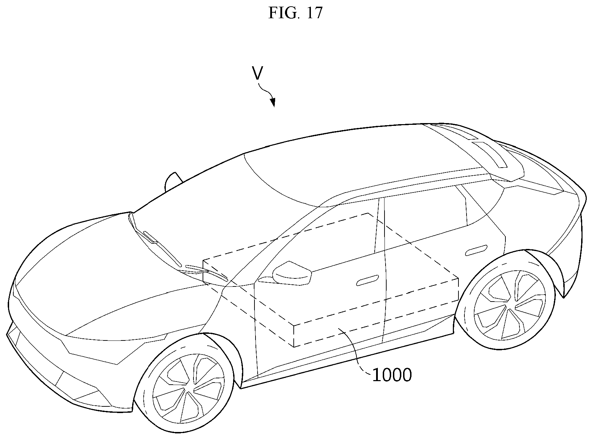

FIG. 17 is a view illustrating a vehicle V according to an aspect of the present disclosure. Referring to FIG. 17, the vehicle V according to the present disclosure may include the battery pack 1000 of the present disclosure.

The battery pack 1000 according to the present disclosure may be applied to a vehicle such as an electric vehicle or a hybrid vehicle. The vehicle V according to the present disclosure may further include various other components typically included in a vehicle in addition to the battery pack 1000. For example, the vehicle V according to the present disclosure may further include a vehicle body, a motor, and control devices such as an ECU (electronic control unit).

While the present disclosure has been described using limited embodiments and drawings, the present disclosure is not limited thereto, and it may be appreciated that various modifications and changes may be made by those having ordinary skill in the art of the present disclosure within the technical idea of the present disclosure and the equitable scope of the claims set forth below.

## Claims

1. A battery pack comprising:
a base plate;
an upper plate including a coupling portion coupled to an upper surface of the base plate, a protruding portion extending rearward from the coupling portion and providing an internal space, and a buffering portion extending forward from the coupling portion and providing an internal space; and
a battery module including a venting portion facing the buffering portion and being in contact with the protruding portion.

2. The battery pack according to claim 1, wherein the buffering portion is spaced apart from the base plate.

3. The battery pack according to claim 1, wherein the buffering portion is spaced apart from the venting portion.

4. The battery pack according to claim 1, wherein the buffering portion extends toward the venting portion.

5. The battery pack according to claim 1, wherein a height of the buffering portion is configured to be lower than a height of the protruding portion.

6. The battery pack according to claim 1, wherein the protruding portion includes:
a support portion that is in contact with the battery module; and
an inclined portion that connects the support portion and the coupling portion and has an inlet hole.

7. The battery pack according to claim 6, wherein the inclined portion includes a convex portion protruding outward.

8. The battery pack according to claim 6, wherein the inclined portion includes a concave portion protruding inward.

9. The battery pack according to claim 6, wherein the inclined portion includes a venting guide that covers a part of the inlet hole.

10. The battery pack according to claim 9, wherein the venting guide includes a first venting guide extending outward from the inclined portion.

11. The battery pack according to claim 9, wherein the venting guide includes a second venting guide extending inward from the inclined portion.

12. The battery pack according to claim 1, further comprising:
a venting device located inside the upper plate and installed on the base plate.

13. A vehicle comprising the battery pack of claim 1.

14. A battery pack case comprising:
a base assembly;
a side wall installed at an upper surface edge of the base assembly; and
a pack cover installed on the side wall,
wherein the base assembly includes:
a base plate; and
an upper plate including a coupling portion coupled to an upper surface of the base plate, a protruding portion extending rearward from the coupling portion and providing an internal space, and a buffering portion extending forward from the coupling portion and providing an internal space,
wherein the protruding portion is configured to be contacted by a battery module from above, and the buffering portion is configured to face a venting portion of the battery module mounted from above.

15. The battery pack case according to claim 14, wherein the protruding portion includes a support portion spaced apart from the base plate, and the battery module is configured to be fastened to the support portion from above.

16. The battery pack case according to claim 15, wherein the protruding portion includes an inclined portion that connects the support portion and the coupling portion, and the inclined portion is formed with a plurality of inlet holes.

17. The battery pack case according to claim 14, wherein the upper plate is integrally formed.

18. The battery pack case according to claim 14, wherein a height of the buffering portion is configured to be lower than a height of the protruding portion.
